# EUROPEAN PATENT APPLICATION

(11) **EP 4 142 071 A1**
(43) Date of publication of application: **01.03.2023**
(21) Application number: 21306147.6
(22) Date of filing: 25.08.2021
(51) Int. Cl.: H01S 3/00, H01S 3/067, H01S 3/23, G06N 10/40, H01S 3/16

(54) **LASER APPARATUS FOR EXCITATION OF RUBIDIUM ATOMS IN A QUANTUM PROCESSOR**

(71) Applicant: Pasqal, 91120 Palaiseau (FR)
(72) Inventor: Pöpplau, Torben, 75003 Paris (FR); Béguin, Lucas, 75020 Paris (FR); Dumas, Arnaud, 91120 Palaiseau (FR)
(74) Representative: Slingsby Partners LLP

(57) **Abstract**

According to a first aspect, the present disclosure relates to a laser apparatus (210) for excitation of Rubidium (Rb) atoms in a quantum processor comprising an Er DFB laser (201) for emitting light at a wavelength of around 1560 nm; at least a first Yb DFB laser (202) for emitting light at a wavelength of around 1090 nm; a fiber-coupled laser source (203) for emitting light at a wavelength of around 1013 nm; a first fiber-coupled SHG device (301) configured to receive said light from said Yb DFB laser (202) and to produce light at a wavelength of around 545 nm; at least a first fiber-coupled DFG device (302) configured to receive a first part of said light from said Er DFB laser (201) and said light from said first fiber-coupled SHG device (301) and produce light at a wavelength of around 840 nm; a second fiber-coupled SHG device (303) configured to receive said light from said first fiber-coupled DFG device (302) and produce light at a wavelength of around 420 nm; a third fiber-coupled SHG device (304) configured to receive a second part of said light from said Er DFB laser (201) and produce light at a wavelength of around 780 nm, wherein said light at wavelength of around 780 nm is configured to produce MOT laser beams (111, 112, 113) for magneto-optical trapping of the Rb atoms and an optical pumping laser beam (120) for optical pumping of the Rb atoms; wherein said light at a wavelength of around 420 nm and said light at a wavelength of around 1013 nm are configured to produce Rydberg laser beams (141, 142) for transition of Rb atoms to Rydberg states.

## Description

### TECHNICAL FIELD OF THE INVENTION

The present description relates to a laser apparatus for excitation of Rubidium atoms in a quantum processor. Further, the present description relates to a quantum processor comprising such laser apparatus. Further, the present description relates to a method for exciting Rubidium atoms in a quantum processor.

### BACKGROUND OF THE INVENTION

A quantum processor is a device that is configured to process input data by using quantum states of physical systems, such as atoms or photons, in order to implement an algorithm on said input data and generate output data. Such algorithms can be of various types, as disclosed in [REF 1]. For example, in the so-called digital (or universal) approach, algorithms comprise a sequence of quantum operations that are implemented on predetermined physical systems of the quantum processor. Alternatively, in the analog approach, algorithms comprise the reproduction of a predetermined Hamiltonian evolution by the physical systems of the quantum processor, such reproduction comprising, for example, a plurality of quantum operations.

Neutral atom-based quantum processors generally comprise an ensemble of atoms in a vacuum chamber wherein the quantum state of each atom is used to perform the operations of the algorithm. When an operation of the algorithm is implemented on the quantum state of a single atom, it is referred to as a single-qubit operation and when an operation of the algorithm is implemented on the quantum states of a plurality of atoms, it is referred to as a multi-qubit operation.

Further, said quantum state of the atom can be an excited state (such as a Rydberg state) or a fundamental state, wherein the excitation to such excited state is produced, for example, by the interaction between a laser beam and said atom.

In order to perform an algorithm with a neutral-atom based quantum processor, three steps are generally performed. In a first step, also referred to as preparation step, the atoms are prepared in a predetermined quantum state. In a second step, also referred to as quantum processing step, the quantum states of the atoms are modified to perform operations corresponding to operations of the algorithm on the input data. In a third step, also referred to as readout step, the quantum states of the atoms are read out in order to obtain the output data. Such steps imply the use of a plurality of laser beams to perform a plurality of functions.

In the particular case of a Rubidium-based quantum processor, as disclosed for example in [REF2], Rubidium (Rb) atoms are introduced in a vacuum chamber and maintained in a predetermined volume of said chamber using a magneto-optical trap (MOT) comprising static magnetic fields and a plurality of MOT laser beams at a wavelength of about 780 nm. Such MOT laser beams aim at both reducing the kinetic energy of the atoms (i.e. their temperature) and, in combination with static magnetic fields, at introducing a restoring force that imposes the atoms to remain at a nearly fixed location.

Further, dipolar trapping is implemented in the vacuum chamber in order to trap individual atoms at different predetermined locations so that they can be individually addressed. More specifically, the atoms are arranged in an array of predetermined dimensions by creating a ID, 2D, or 3D lattice of dipolar optical traps, each trap comprising at most one atom. Such lattice is generated by a dipolar trapping beam at a wavelength of about 840 nm (or, more generally, a wavelength between about 800 nm and about 1560 nm) sent to a spatial light modulator that focuses said beam at said predetermined locations.

The atoms are then prepared in a predetermined quantum state, for example a fundamental state, by using an optical pumping beam with a wavelength close to a resonance with a transition between quantum states of Rb atoms. For example, in [REF2], such an optical pumping beam has a wavelength of about 780 nm, but it is also possible to use, *inter alia,* an optical pumping beam with a wavelength of about 795 nm or 420 nm.

Further, a so-called Rydberg excitation of Rubidium atoms in the vacuum chamber is implemented thanks to a two-photon transition scheme. In practice, a first and a second Rydberg beams at a wavelength of about 475 nm and about 795 nm, respectively (as disclosed, for example in [REF2]), or at a wavelength of about 420 nm and 1013 nm, respectively (as disclosed, for example, in [REF3]), are sent to a predetermined number of atoms of the array to induce Rydberg transitions in said atoms so that the combined evolution of said atoms is submitted to their dipolar interaction. In particular, when two atoms are sufficiently close to one another, they cannot be simultaneously excited to a Rydberg state. This phenomenon, referred to as Rydberg blockade, can be used to perform multi-qubit operations of the algorithm on the atoms.

Further, as disclosed for example in [REF3], Raman laser beams (for example at a wavelength of around 795 nm) may also be used to manipulate a quantum state of a predetermined atom of the array of atoms in the vacuum chamber in order to perform a single qubit operation on said atom or as a part of multi-qubit operation involving said atom.

More specifically, the Raman beams and the Rydberg beams can comprise one or more pulses, as explained in [REF1]. For example, in a single-qubit operation, only pulses of Raman laser beams can be used whereas, in a multi-qubit operation comprising a predetermined number of operations, a sequence of Rydberg and Raman laser beams pulses can be used.

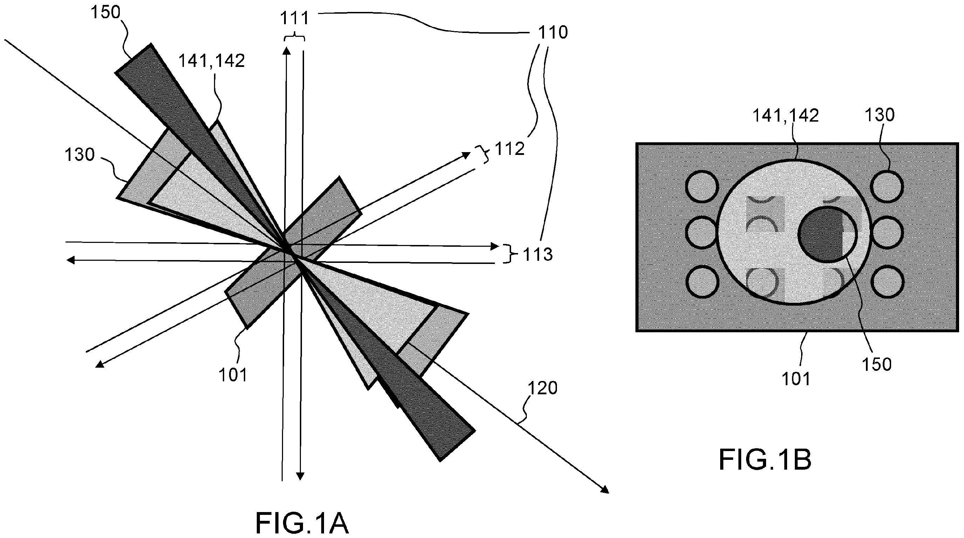

FIG. 1A schematically illustrates a plurality of laser beams configured to perform all the aforementioned functions (MOT, optical pumping, dipolar trapping, Rydberg excitation, Raman excitation) in a quantum processor. Such plurality of laser beams comprise the MOT laser beams 110 and the optical pumping beam 120 at around 780 nm, the dipolar trapping laser beam 130 at around 840 nm, the Raman laser beams 150 at around 795 nm, the first Rydberg laser beam 141 at around 420 nm, and the second Rydberg laser beam 142 at around 1013 nm. In particular the MOT laser beams 110 comprise three series (111, 112, 113) of two counterpropagating laser beams.

FIG. 1B schematically illustrates the laser beams in a plane 101 of the array of atoms of the neutral atom quantum processor. The dipolar trapping beam 130 is focused into a plurality of spots producing a ID, 2D or 3D array of optical traps that can generate an array of individual atoms. The first and the second Rydberg beams 141, 142 are configured to illuminate a predetermined number of atoms in the array on which a multi-qubit operation is performed. The Raman beams 150 are focused on one atom in order to induce a Raman transition in said atom and thus perform a single qubit operation on said atom or as a part of a multi-qubit operation involving such atom.

In order to generate the plurality of laser beams configured to perform all the aforementioned functions (MOT, optical pumping, dipolar trapping, Rydberg excitation, Raman excitation), it is known to use a laser apparatus comprising a plurality of independent laser systems and nonlinear devices. In the example disclosed in [REF2], such laser apparatus comprises: a laser diode at 780 nm for producing non-focused MOT laser beams 110 and a non-focused optical pumping beam 120, a laser diode at 840 nm and a free-space tapered amplifier for producing the dipolar trapping beam 130, a laser diode at 795 nm for producing focused Raman laser beams 150 and a first Rydberg laser beam 141. Further, a laser diode at 950 nm, a second harmonic generation device (SHG), and a free space tapered amplifier are used for producing the second Rydberg focused laser beam 142. Alternatively, as disclosed in [REF4], such laser apparatus can comprise a plurality of titanium-sapphire lasers for producing the Rydberg laser beams 141,142 and the dipolar trapping beam 130.

Such laser apparatuses comprise a large number of solid state-based and/or semiconductor-based laser systems, which complexifies the structure of the neutral atom-based quantum processor operational system and undermines its robustness and reliability. Further, such laser apparatuses include a large number of free-space coupled elements making them very sensitive to vibration-induced misalignment, hereby deteriorating efficiencies of fiber-coupling and/or of non-linear functions. As a result, such apparatuses may require tedious realignment when transported between different locations. Consequently, such laser apparatuses generally lack reliability, which hampers the commercial use of quantum processors comprising such laser apparatuses.

There is thus a need for a laser apparatus to generate laser beams in a neutral atom-based quantum processor that is more reliable than in the prior art.

### SUMMARY

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

According to a first aspect, the present description relates to a laser apparatus for excitation of Rubidium atoms in a quantum processor comprising:
- an Er DFB laser for emitting light at a wavelength of around 1560 nm;
- at least a first Yb DFB laser for emitting light at a wavelength of around 1090 nm;
- a fiber-coupled laser source for emitting light at a wavelength of around 1013 nm;
- a first fiber-coupled SHG device configured to receive light from said Yb DFB laser and to produce light at a wavelength of around 545 nm;
- at least a first fiber-coupled DFG device configured to receive a first part of said light from said Er DFB laser and said light from said first fiber-coupled SHG device and produce light at a wavelength of around 840 nm;
- a second fiber-coupled SHG device configured to receive a first part of said light from said first fiber-coupled DFG device and produce light at a wavelength of around 420 nm;
- a third fiber-coupled SHG device configured to receive a second part of light from said Er DFB laser and produce light at a wavelength of around 780 nm,

wherein said light at wavelength of around 780 nm is configured to produce MOT laser beams for magneto-optical trapping of the Rb atoms and an optical pumping laser beam for optical pumping of the Rb atoms;
wherein said light at a wavelength of around 840 nm is configured to produce a dipolar trapping laser beam for trapping individual Rb atoms at predetermined locations;
wherein said light at a wavelength of around 420 nm and said light at a wavelength of around 1013 nm are configured to produce Rydberg laser beams for transition of Rb atoms to Rydberg states.

The laser apparatus of the first aspect provides laser beams to excite Rb atoms of a neutral atom-based quantum processor using an original arrangement of fiber-coupled laser sources and fiber-coupled non-linear devices (SHG and DFG) which drastically reduces the number of free-space coupled elements, therefore making the laser apparatus more robust and reliable than in the prior art.

Further, in such laser apparatus, the laser source emitting light at a wavelength of around 1560 nm is used for producing the optical pumping beam, the MOT beam and, in combination with the laser source emitting light at a wavelength of around 1090 nm, the dipolar trapping beam and the first Rydberg beam. Therefore, such laser apparatus can provide the MOT beam, the optical pumping beam, the dipolar trapping beam, the first Rydberg beam and the second Rydberg beam with only three fiber-coupled laser sources. As a result, such laser apparatus has a simpler structure and an improved reliability compared to the laser apparatuses of the prior art.

In the present description, an Erbium-based DFB laser (also referred to as Er DFB laser) is a DFB fiber laser comprising an Erbium-doped fiber as a gain medium.

In the present description, an Ytterbium-based DFB laser (also referred to as Yb DFB laser) is a DFB fiber laser comprising an Ytterbium-doped fiber as a gain medium.

In the present description, Thulium-based DFB laser (also referred to as Tm DFB laser) is a DFB fiber laser comprising a Thulium-doped fiber as a gain medium.

In the present description, a DFB fiber laser is a Distributed Feedback fiber laser, i.e. a fiber-coupled laser system comprising a fiber-coupled pump laser diode and a gain medium, wherein the gain medium is a rare earth-doped fiber comprising a diffraction grating. Different types of rare earth can be used depending on the wavelength of the light emitted by the DFB fiber laser.

In the present description, an SHG device is a second harmonic generation device configured to produce, from light at a first frequency, light at a second frequency equal to twice said first frequency.

In the present description, a DFG device is a difference frequency generation device configured to produce, from light at a first frequency and light at a second frequency, light at a third frequency equal to a difference between the largest of the first and second frequencies and the smallest of the first and second frequencies.

According to one or further embodiments, the DFG device can also transmit part of the light at said first frequency and/or part of the light at said second frequency.

According to one or further embodiments, the laser apparatus further comprises:
- a second Yb DFB laser for emitting light at a wavelength of around 1053 nm;
- a fourth fiber-coupled SHG device configured to receive said light from said second Yb DFB laser and produce light at a wavelength of around 526.5 nm;
- a second fiber-coupled DFG device configured to receive said light from said fourth fiber-coupled SHG device and a third part of said light from said Er DFB laser, and to produce light at a wavelength of around 795 nm;
wherein said light at a wavelength of around 795 nm is configured to produce Raman laser beams for Raman transition of the Rb atoms.

Such embodiments of the laser apparatus provide laser beams to excite Rb atoms of a neutral atom-based quantum processor to perform single-qubit operations or multi-qubit operations between fundamental states of atoms, using fiber-coupled laser sources and fiber-coupled non-linear devices (SHG and DFG). Therefore, such embodiments are more robust than laser apparatuses of the prior art.

Further, in such embodiments, the laser source emitting light at a wavelength of around 1560 nm is further used to produce, in combination with the laser source emitting light at a wavelength of around 1053 nm, the Raman beams to induce Raman transition of an atom of the quantum processor. Therefore, such laser apparatus can provide the MOT laser beams, the optical pumping laser beam, the dipolar trapping laser beam, the first Rydberg laser beam, the second Rydberg laser beam and the Raman laser beams with only four fiber-coupled laser sources. As a result, such laser apparatus has a simpler structure and an improved reliability compared to laser apparatuses of the prior art.

According to one or further embodiments, the fiber-coupled laser source for emitting light at a wavelength of around 1013 nm comprises a fiber-coupled Tm DFB laser for emitting light at a wavelength of around 2026 nm and a fifth fiber-coupled SHG device configured to receive said light at a wavelength of around 2026 nm and to produce light at a wavelength of around 1013 nm.

In such embodiment, said light at a wavelength of around 1013 nm is produced using fiber-coupled elements (a Tm DFB laser and a fiber-coupled SHG device), which makes the laser apparatus more reliable than apparatuses of the prior art comprising free space-coupled elements.

According to one or further embodiments, said fiber-coupled laser source for emitting light at a wavelength of around 1013 nm comprises an Yb DFB laser.

In such embodiments, said light at a wavelength of around 1013 nm can be produced using a fiber-coupled laser source (the Yb DFB laser) without using an SHG device, hereby simplifying the laser apparatus and making it more reliable than apparatuses of the prior art.

According to one or further embodiments, the laser apparatus further comprises
- an Erbium-doped fiber amplifier configured to receive said light from the Er DFB laser and produce amplified light that is sent to the at least first fiber-coupled DFG device;
- at least a first Ytterbium-doped fiber amplifier configured to receive said light from said at least first Yb DFB laser and produce amplified light that is sent to the at least first fiber-coupled SHG device.

In such embodiments, it is possible to produce a dipolar trapping beam using fiber amplifiers. Therefore, such laser apparatus is more reliable than apparatuses of the prior art comprising free space-tapered amplifiers which require very high current and are not reliable over extended period of time. Further, such laser apparatus is also more reliable than apparatuses of the prior art comprising solid state-based lasers such as titanium-sapphire lasers, which are very sensitive to vibrations and are complex to operate outside a laboratory environment.

According to one or further embodiments, the laser apparatus further comprises
- a second Ytterbium-doped fiber amplifiers configured to receive said light from the second Yb DFB laser and produce amplified light that is sent to the fourth SHG device;
- a Thulium-doped fiber amplifier configured to receive said light from the Tm DFB laser and produce amplified light that is sent to the fifth fiber-coupled SHG device.

In such embodiments, the MOT beams, the optical pumping beam, the dipolar trapping beam, the first and the second Rydberg beams and the Raman beams are produced by using amplification of light with fiber amplifiers. Therefore, such a laser apparatus is more reliable than apparatuses of the prior art that use amplification of light relying on free space tapered amplifiers and/or that rely on the high output power of solid state-based lasers such as titanium-sapphire lasers.

According to a second aspect, the present description relates to a quantum processor comprising:
- a vacuum system assembly configured to receive Rb atoms;
- a laser apparatus according to the first aspect configured to produce laser beams for excitation of Rb atoms arranged in the vacuum system assembly;
- a detection system configured to detect quantum states of Rb atoms in the vacuum system assembly;
- a processing unit configured to receive input data, calculate command data from the input data, and generate output data from the detected quantum states of Rb atoms;
- a control unit configured to receive command data from the processing unit and control the laser beams produced by the laser apparatus using said command data to excite Rb atoms in said vacuum system assembly.

According to a third aspect, the present description relates to a method for exciting Rubidium atoms in a quantum processor comprising:
- emitting light at a wavelength of around 1560 nm using an Er DFB laser;
- emitting light at a wavelength of around 1090 nm using at least a first Yb DFB laser;
- emitting light at a wavelength of around 1013 nm using a fiber-coupled laser source;
- producing light at a wavelength of around 545 nm from said light at a wavelength of around 1090 nm using a first fiber-coupled SHG device;
- producing light at a wavelength of around 840 nm from a first part of said light at a wavelength of around 1560 nm and said light at a wavelength of around 545 nm, using at least a first fiber-coupled DFG device;
- producing light at a wavelength of around 420 nm from a first part of said light at a wavelength of around 840 nm using a second fiber-coupled SHG device;
- producing light at a wavelength of around 780 nm from a second part of said light at a wavelength of around 1560 nm using a third fiber-coupled SHG device;
- producing MOT laser beams for magneto-optical trapping of the Rb atoms using said light at a wavelength of around 780 nm;
- producing an optical pumping laser beam for optical pumping of the Rb atoms using said light at a wavelength of around 780 nm;
- producing a dipolar trapping laser beam for dipolar trapping of the Rb atoms at individual predetermined locations; using said light at a wavelength of around 840 nm; and
- producing Rydberg laser beams for transition of Rb atoms to Rydberg states using said light at a wavelength of around 420 nm and said light at a wavelength of around 1013 nm.

According to one or further embodiments, the method further comprises
- emitting light at a wavelength of around 1053 nm using a second Yb DFB laser;
- producing light at a wavelength of around 526.5 from said light at a wavelength of around 1053 nm using a fourth fiber-coupled SHG device;
- producing light at a wavelength of around 795 nm from said light at a wavelength of around 526.5 and a third part of said light at a wavelength of around 1560 nm, using a second fiber-coupled DFG device; and
- producing Raman laser beams for Raman transition of the Rb atoms using said light at a wavelength of around 795 nm.

### BRIEF DESCRIPTION OF DRAWINGS

Other advantages and features of the invention will become apparent on reading the description, illustrated by the following figures which represent:
- FIG. 1A and FIG. 1B (already described) are schematic diagrams illustrating an ensemble of laser beams used to excite Rubidium atoms in a quantum processor;
- FIG. 2 is a block diagram of a quantum processor comprising a laser apparatus according to the present description;
- FIGS. 3 is a block diagram corresponding to parts of a quantum processor comprising a laser apparatus, according to an embodiment;
- FIG. 4 is a block diagram corresponding to an embodiment of a laser apparatus according to the present description.

### DETAILED DESCRIPTION

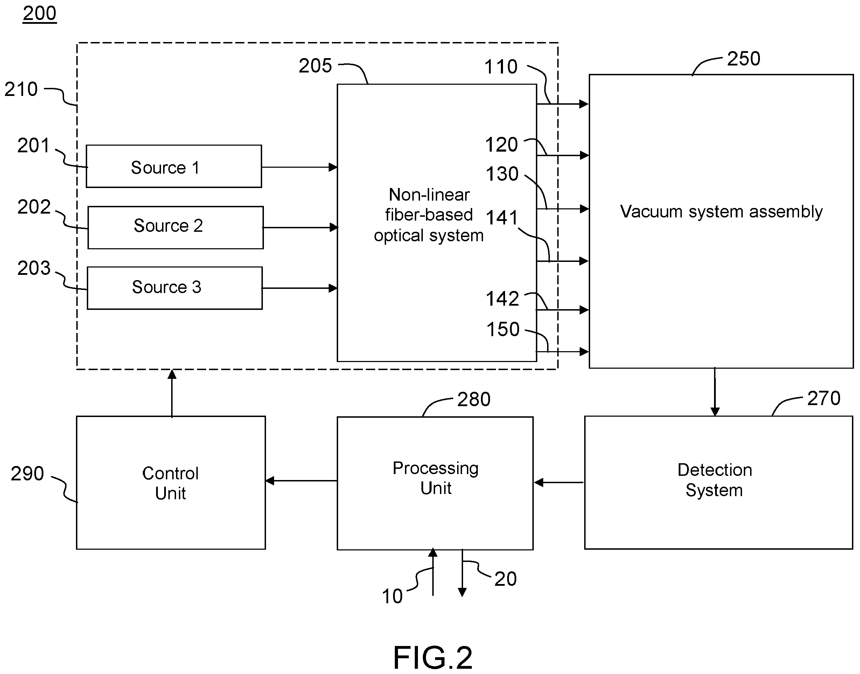

FIG. 2 represents a schematic view of a quantum processor 200 configured to implement an algorithm on input data 10 and generate output data 20.

According to one or further embodiments, the quantum processor 200 comprises a laser apparatus 210, a vacuum system assembly 250, a detection system 270, a processing unit 280 and a control unit 290.

According to one or further embodiments, the quantum processor 200 comprises a processing unit 280 in communication with a control unit 290. The processing unit 280 is configured to receive input data 10 from an external user and generate command data that are sent to the control unit 290. The control unit 290 uses the command data in order to control a laser apparatus 210 so that the laser apparatus 210 produces a plurality of laser beams (110, 120, 130, 141, 142, 150). Such plurality of beams comprises: MOT beams 110, an optical pumping beam 120, a dipolar trapping beam 130, a first Rydberg beam 141, a second Rydberg beam 142, and Raman beams 150.

The vacuum system assembly 250 comprises a vacuum chamber and a plurality of Rubidium atoms. The vacuum system assembly 250 is configured to receive the plurality of beams (110, 120, 130, 141, 142, 150) in order to implement operations of an algorithm on the input data 10. The operations of the algorithm are performed using quantum states of the Rubidium atoms in the vacuum chamber.

According to one or further embodiments, the vacuum system assembly 250 further comprises free-space optical elements configured to direct said beams to said Rubidium atoms, such as optical isolators, lenses, mirrors, waveplates, polarizers. Such vacuum system can also comprise other free-space optical elements, for example optical modulators.

After an algorithm has been implemented on the Rubidium atoms, the quantum states of the Rubidium atoms of the vacuum chamber are detected by a detection system 270 and analyzed by a processing unit 280 in order to generate output data 20.

According to one or further embodiments, the laser apparatus 210 comprises a plurality of fiber-coupled laser sources, for example three different laser sources (201, 202, 203), and a non-linear fiber-based optical system 205.

The non-linear fiber-based optical system 205 is configured to receive light emitted from said plurality of laser sources (201, 202, 203) and generate said plurality of laser beams (110, 120, 130, 141, 142, 150). In the example shown in FIG. 2, only three laser sources are represented, however embodiments of the laser apparatus 210 may comprise more than three sources. For example, in order to generated all the beams of the plurality of laser beams (110, 120, 130, 141, 142, 150), four laser sources may be used.

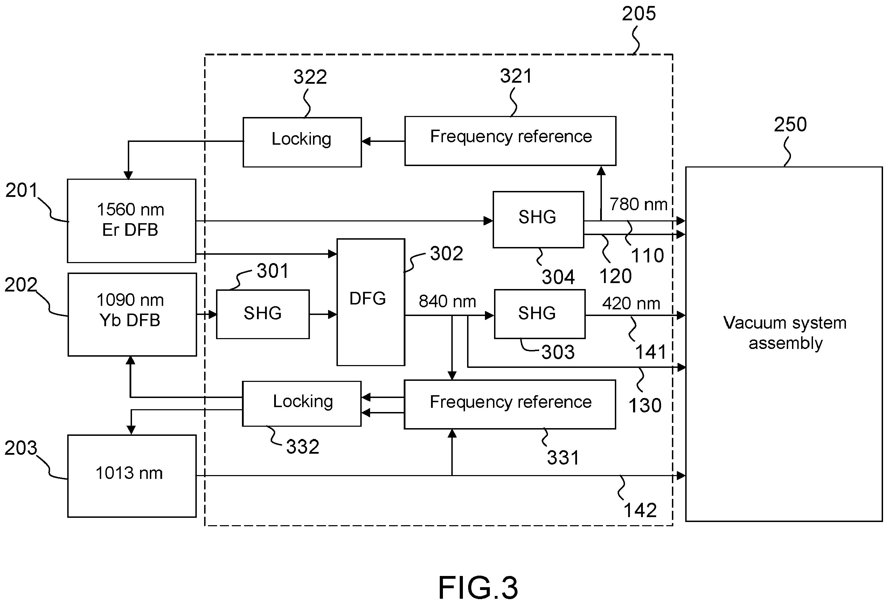

FIG. 3 represents a laser apparatus 210 configured to produce MOT beams 110, an optical pumping beam 120, a dipolar trapping beam 130, a first Rydberg beam 141 and a second Rydberg beam 142.

The laser apparatus comprises three laser sources, an Er DFB laser 201 emitting light at a wavelength of about 1560 nm, an Yb DFB laser 202 emitting light at a wavelength of about 1090 nm, and a fiber-coupled laser 203 emitting light at a wavelength of about 1013 nm.

A part of the light emitted by the Er DFB laser 201 is sent to a fiber-coupled SHG device 304 in order to double the frequency of said part of light and produce light at a wavelength of about 780 nm which is configured to form said MOT beams 110 and said optical pumping beam 120.

Light emitted by the Yb DFB laser 202 is sent to a fiber-coupled SHG device 301 in order to double the frequency of said light and produce light at a wavelength of about 545 nm. Said light at a wavelength of about 545 nm and a part of the light emitted by the Er DFB laser 201 are then sent to a fiber-coupled DFG device 302 in order to produce light at a wavelength of about 840 nm. Said light at a wavelength of about 840 nm is then sent to an SHG device 303 to produce light at a wavelength of about 420 nm which is configured to form said first Rydberg beam 141.

A part of said light produced by said DFG device 302 does not pass through the SHG device 303 and is configured to form said dipolar trapping beam 130.

According to one or further embodiments, said dipolar trapping beam 130 is formed by sending said light at a wavelength of about 840 nm, produced by said DFG device 302, to an optical system, for example a spatial light modulator, in order to produce an array of optical dipole traps that can trap individual atoms. Said array of optical traps can be rearranged using said optical systems.

Light at a wavelength of about 1013 nm emitted by the fiber-coupled laser source 203 is configured to form the second Rydberg beam 142.

According to one or further embodiments, the fiber-coupled laser source 203 comprises a Yb DFB laser optimized to emit light at a wavelength of about 1013 nm.

According to one or further embodiments, the fiber-coupled laser source 203 comprises a Tm DFB laser emitting light at a wavelength of about 2046 nm whose frequency is doubled using a fiber-coupled SHG device in order to produce light at a wavelength of about 1013 nm.

According to one or further embodiments, one, two or all of the laser sources 201, 202, 203 are frequency-stabilized via frequency stabilization techniques using frequency references 321, 331) and locking electronics (322, 332).

The frequency (and, therefore, the wavelength) of the Er DFB laser 201 is stabilized by sending a part of the light at a wavelength of about 780 nm produced by the fiber-coupled SHG device 304 to the frequency reference 321, for example a saturated absorption spectroscopy setup. The frequency of said light at a wavelength of about 780 nm is compared with a frequency of the frequency reference 321, for example a frequency corresponding to a known atomic transition, and an error signal is obtained. Such error signal is processed by the locking electronics 322 (comprising, for example, loop filters) and fed to the Er DFB laser 201 in order to correct for possible frequency variations and stabilize the frequency of the light emitted by said Er DFB laser 201.

The frequency of the Yb DFB laser 202 is stabilized by sending a part of the light at a wavelength of about 840 nm produced by the fiber-coupled DFG device 302 to the frequency reference 331, for example a passive ultra-stable optical cavity, in order to obtain an error signal via a Pound-Drever-Hall locking scheme. Such error signal is processed by the locking electronics 332 (comprising, for example, loop filters) and fed to the Er DFB laser 201 in order to correct for possible frequency variations and stabilize the frequency of the light emitted by said Yb DFB laser 202.

Similarly, the frequency of the fiber-coupled laser source 203 is stabilized by sending a part of the light at a wavelength of about 1013 nm to the frequency reference 331 in order to obtain an error signal. Such error signal is processed by the locking electronics 332 and fed to the fiber-coupled laser source 203 in order to correct for possible frequency variations and stabilize the frequency of the light emitted by said fiber-coupled laser source 203.

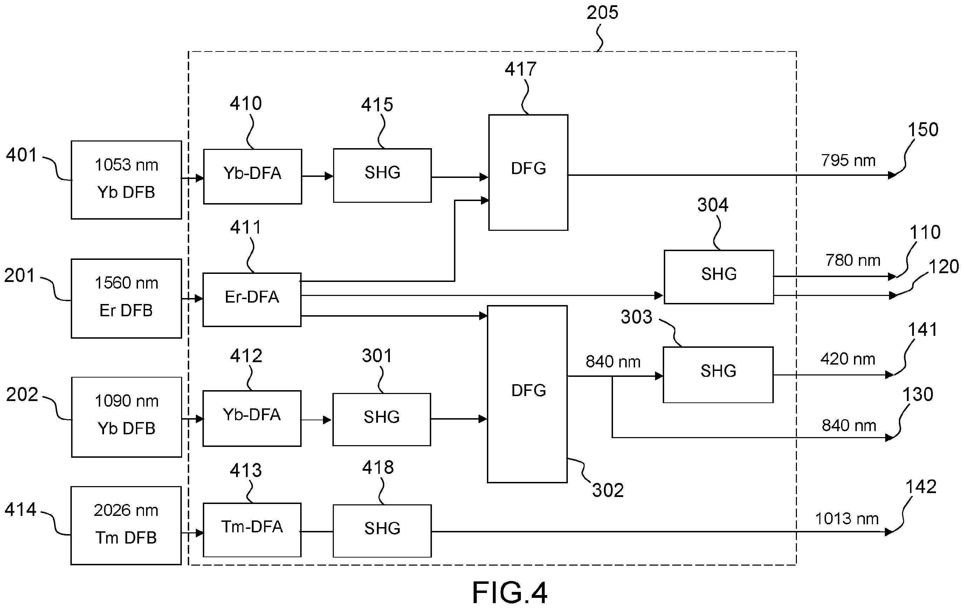

FIG. 4 represents embodiments of a laser apparatus 210 comprising four laser sources: an Er DFB laser 201 emitting light at a wavelength of about 1560 nm, an Yb DFB laser 202 emitting light at a wavelength of about 1090 nm, a Tm DFB laser 414 emitting light at a wavelength of about 2026 nm, and a Yb DFB laser 401 emitting light at a wavelength of about 1053 nm. Compared to the embodiments represented in FIG. 3, the laser apparatus represented in FIG. 4 additionally produces light at a wavelength of about 795 nm that is configured to form the Raman laser beams 150. Further, such embodiments comprise a Tm DFB laser emitting light at a wavelength of about 2046 nm whose frequency is doubled using a fiber-coupled SHG device 418 in order to produce light at a wavelength of about 1013 nm.

In the embodiments represented in FIG. 4, the light emitted by the laser sources (410, 201, 202, 414) is amplified using fiber-based amplifiers: a first Ytterbium-doped fiber amplifier (Yb-DFA) 412, an Erbium-doped fiber amplifier (Er-DFA) 411, a second Yb-DFA 412 and a Thulium-doped fiber amplifier (Tm-DFA) 413, respectively.

In particular, in the laser apparatus represented in FIG. 4, the Yb DFB laser 401 emits light at a wavelength of about 1053 nm that is sent to an Yb-DFA 410 to be amplified. Said amplified light produced by the Yb-DFA 410 is sent to a SHG device 415 that doubles the frequency of said amplified light and produce light at a wavelength of about 526.5 nm. Said light at a wavelength of about 526.5 nm and a part of the light at a wavelength of about 1560 nm emitted by the Er DFB 201 and amplified by the Er-DFA 411 are sent to a fiber-coupled DFG device 417 in order to produce light at a wavelength of about at a wavelength of about 795 nm that is configured to form Raman laser beams 150.

Although not represented in FIG. 3, in the embodiments represented by FIG. 3, fiber-based amplifiers may also be used to amplify respectively light emitted by the Er DFB laser 201, light emitted by the Yb DFB laser 202 and light emitted by the fiber-coupled laser source 203 as described in reference to FIG. 4.

According to one or further embodiments, the Raman beams 150 comprise two beams with a frequency difference of about 6.8 GHz. Such two beams can be generated with different setups. In a first exemplary setup, two laser beams at different optical frequencies are emitted by two laser sources and are superimposed. In a second exemplary setup, the two Raman laser beams are generated by modulating a single beam. This is done by modulating the phase or the intensity of the light at a wavelength of about 795nm, in order to generate modulation sidebands in said light, for example with an electro-optic modulator, wherein said sidebands are separated by said frequency difference of 6.8 GHz.

While the invention has been described with respect to a limited number of embodiments, those skilled in the art, having benefit of this disclosure, will appreciate that other embodiments can be devised which do not depart from the spirit of the invention as disclosed herein. Accordingly, the scope of the invention should be limited only by the attached claims.

### REFERENCES

[REF1] HENRIET, Loic, BEGUIN, Lucas, SIGNOLES, Adrien, et al. Quantum computing with neutral atoms. Quantum, 2020, vol. 4, p. 327.
[REF2] LABUHN, Henning, BARREDO, Daniel, RAVETS, Sylvain, et al. Tunable two-dimensional arrays of single Rydberg atoms for realizing quantum Ising models. Nature, 2016, vol. 534, no 7609, p. 667-670.
[REF3] LEVINE, Harry, KEESLING, Alexander, SEMEGHINI, Giulia, et al. Parallel implementation of high-fidelity multiqubit gates with neutral atoms. Physical review letters, 2019, vol. 123, no 17, p. 170503.
[REF4] SCHOLL, Pascal, SCHULER, Michael, WILLIAMS, Hannah J., et al. Programmable quantum simulation of 2D antiferromagnets with hundreds of Rydberg atoms. arXiv preprint arXiv:2012.12268, 2020.

## Claims

1. A laser apparatus (210) for excitation of Rubidium atoms in a quantum processor comprising:
- an Er DFB laser (201) for emitting light at a wavelength of around 1560 nm;
- at least a first Yb DFB laser (202) for emitting light at a wavelength of around 1090 nm;
- a fiber-coupled laser source (203) for emitting light at a wavelength of around 1013 nm;
- a first fiber-coupled SHG device (301) configured to receive said light from said Yb DFB laser (202) and to produce light at a wavelength of around 545 nm;
- at least a first fiber-coupled DFG device (302) configured to receive a first part of said light from said Er DFB laser (201) and said light from said first fiber-coupled SHG device (301) and produce light at a wavelength of around 840 nm;
- a second fiber-coupled SHG device (303) configured to receive a first part of said light from said first fiber-coupled DFG device (302) and produce light at a wavelength of around 420 nm;
- a third fiber-coupled SHG device (304) configured to receive a second part of said light from said Er DFB laser (201) and produce light at a wavelength of around 780 nm,
wherein said light at a wavelength of around 780 nm is configured to produce MOT laser beams (110) for magneto-optical trapping of the Rubidium atoms and an optical pumping laser beam (120) for optical pumping of the Rubidium atoms;
wherein said light at a wavelength of around 840 nm is configured to produce a dipolar trapping beam (130) for trapping individual Rubidium atoms at predetermined locations;
wherein said light at a wavelength of around 420 nm and said light at a wavelength of around 1013 nm are configured to produce Rydberg laser beams (141, 142) for transition of Rubidium atoms to Rydberg states.

2. The laser apparatus according to claim 1, further comprising:
- a second Yb DFB laser (401) for emitting light at a wavelength of around 1053 nm;
- a fourth fiber-coupled SHG device (415) configured to receive said light from said second Yb DFB laser (401) and produce light at a wavelength of around 526.5 nm;
- a second fiber-coupled DFG device (417) configured to receive said light from said fourth fiber-coupled SHG device (415) and a third part of said light from said Er DFB laser (201), and to produce light at a wavelength of around 795 nm;
wherein said light at a wavelength of around 795 nm is configured to produce Raman laser beams (150) for Raman transition of the Rubidium atoms.

3. The laser apparatus (210) according to any of the preceding claims, wherein said fiber-coupled laser source emitting light at a wavelength of around 1013 nm comprises a fiber-coupled Tm DFB laser (414) for emitting light at a wavelength of around 2026 nm and a fifth fiber-coupled SHG device (418) configured to receive said light at a wavelength of around 2026 nm and to produce light at a wavelength of around 1013 nm.

4. The laser apparatus (210) according to any of claims 1 to 2, wherein said fiber-coupled laser source (203) emitting light at a wavelength of around 1013 nm comprises an Yb DFB laser.

5. The laser apparatus (210) according to any of the preceding claims, further comprising:
- an Erbium-doped fiber amplifier (411) configured to receive said light from the Er DFB laser (201) and produce amplified light that is sent to the at least first fiber-coupled DFG device (302);
- at least a first Ytterbium-doped fiber amplifier (412) configured to receive said light from said at least first Yb DFB laser (202) and produce amplified light that is sent to the at least first fiber-coupled SHG device (301).

6. The laser apparatus (210) according to according to any of the preceding claims, further comprising:
- a second Ytterbium-doped fiber amplifiers (410) configured to receive said light from the second Yb DFB laser (401) and produce amplified light that is sent to the fourth SHG device (415);
- a Thulium-doped fiber amplifier (413) configured to receive said light from the Tm DFB laser (414) and produce amplified light that is sent to the fifth fiber-coupled SHG device (418).

7. A quantum processor (200) comprising:
- a vacuum system assembly (250) configured to receive Rubidium atoms;
- a laser apparatus (210) according to any of the preceding claims configured to produce laser beams (111, 112, 113, 120, 130, 141, 142, 150) for excitation of Rubidium atoms arranged in the vacuum system assembly;
- a detection system (270) configured to detect quantum states of Rubidium atoms arranged in the vacuum system assembly;
- a processing unit (280) configured to receive input data (10), calculate command data from the input data (10), and generate output data (20) from the detected quantum states of Rubidium atoms;
- a control unit (290) configured to receive command data from the processing unit (280) and control the laser beams (111, 112, 113, 120, 130, 141, 142, 150) produced by the laser apparatus using said command data to excite Rubidium atoms in said vacuum system assembly (250).

8. A method for exciting Rubidium atoms in a quantum processor (200) comprising:
- emitting light at a wavelength of around 1560 nm using an Er DFB laser;
- emitting light at a wavelength of around 1090 nm using at least a first Yb DFB laser (202);
- emitting light at a wavelength of around 1013 nm using a fiber-coupled laser source;
- producing light at a wavelength of around 545 nm from said light at a wavelength of around 1090 nm using a first fiber-coupled SHG device (301);
- producing light at a wavelength of around 840 nm from a first part of said light at a wavelength of around 1560 nm and said light at a wavelength of around 545 nm, using at least a first fiber-coupled DFG device (302);
- producing light at a wavelength of around 420 nm from a first part of said light at a wavelength of around 840 nm using a second fiber-coupled SHG device (303);
- producing light at a wavelength of around 780 nm from a second part of said light at a wavelength of around 1560 nm using a third fiber-coupled SHG device (304);
- producing MOT laser beams (110) for magneto-optical trapping of the Rubidium atoms using said light at a wavelength of around 780 nm;
- producing an optical pumping laser beam (120) for optical pumping of the Rubidium atoms using said light at a wavelength of around 780 nm;
- producing a dipolar trapping laser beam (130) for dipolar trapping of the Rubidium atoms at individual predetermined locations using said light at a wavelength of around 840 nm; and
- producing Rydberg laser beams (141, 142) for transition of Rubidium atoms to Rydberg states using said light at a wavelength of around 420 nm and said light at a wavelength of around 1013 nm.

9. The method according to claim 8, further comprising:
- emitting light at a wavelength of around 1053 nm using a second Yb DFB laser (401);
- producing light at a wavelength of around 526.5 from said light at a wavelength of around 1053 nm using a fourth fiber-coupled SHG device (415);
- producing light at a wavelength of around 795 nm from said light at a wavelength of around 526.5 and a third part of said light at a wavelength of around 1560 nm, using a second fiber-coupled DFG device (417); and
- producing Raman laser beams (150) for Raman transition of the Rubidium atoms using said light at a wavelength of around 795 nm.
